# EUROPEAN PATENT APPLICATION

(11) **EP 4 741 774 A1**
(43) Date of publication of application: **13.05.2026**
(21) Application number: 25185672.0
(22) Date of filing: 26.06.2025
(51) Int. Cl.: G01F 1/66, G01F 15/14, G01F 15/18

(54) **ULTRASONIC MEASURING TUBE AND ULTRASONIC FLOWMETER**

(30) Priority: 11.11.2024 CN 202411595164
(71) Applicant: Weihai Ploumeter Co., Ltd., Weihai, Shandong 264203 (CN)
(72) Inventor: JIANG, Xiaofeng, Weihai (CN); CHEN, Hao, Weihai (CN); SUN, Fengwu, Weihai (CN); YU, Hailong, Weihai (CN); ZHAO, Zihui, Weihai (CN)
(74) Representative: Meissner Bolte Nürnberg

(57) **Abstract**

The present invention discloses an ultrasonic measuring tube which comprises tube bodies and a measuring assembly, the tube bodies includes a first tube body and a second tube body, the first tube body and the second tube body are connected in a sealed manner, the first tube body has a first connection groove, and the second tube body has a second connection groove, and the second connection groove and the first connection groove enclose a measuring channel; the measuring assembly is provided within the tube bodies, and the measuring assembly comprises a first ultrasonic transducer, a second ultrasonic transducer and reflective elements. When in use, the fluid to be measured enters the measuring channel from the measuring inlet, and flows out from the measuring outlets, the first ultrasonic transducer and the second ultrasonic transducer are matched to emit and receive ultrasonic waves, and the reflective elements are used to reflect the ultrasonic waves, so that the ultrasonic waves propagate along a direction of the measuring channel, and thus the flow of the fluid is measured. The ultrasonic measuring tube provided by the present invention has a simple and compact structure as well as a small size. The present invention further provides an ultrasonic flowmeter, which includes the above ultrasonic measuring tube and can be used in places with limited installation space.

## Description

### FIELD OF THE INVENTION

The present invention relates to the technical field of flow measuring devices and surrounding supporting facilities thereof, in particular to an ultrasonic measuring tube and an ultrasonic flowmeter.

### BACKGROUND OF THE INVENTION

It is well known that mechanical flowmeters are generally equipped with impellers, through whose rotation the flow is calculated. Mechanical flowmeters are prone to wear, resulting in inaccurate measurement. Ultrasonic flowmeters, on one hand, have no moving parts and thus do not suffer from inaccurate measurement caused by wear during use; on the other hand, have a larger flow area compared to mechanical flowmeters, reducing the possibility of clogging and offering better reliability.

Nowadays, with the increasing requirements for higher accuracy in flow measurement, conventional mechanical flowmeters need to be gradually replaced by ultrasonic flowmeters. However, during such replacement, due to space constraints in certain applications, existing ultrasonic flowmeters cannot replace mechanical flowmeters because of the larger size of the existing ultrasonic flowmeters.

### SUMMARY OF THE INVENTION

The objective of the present invention is to provide an ultrasonic measuring tube and an ultrasonic flowmeter, to solve the above problems in the related technologies, improving the accuracy of flow measurement, wherein the structure of the ultrasonic measuring tube is simple and compact, which is beneficial for reducing the space occupied by the ultrasonic flowmeter and improving the adaptability of the ultrasonic flowmeter.

In order to achieve the above objective, the present invention provides the following solutions:

The present invention provides an ultrasonic measuring tube, comprising:
tube bodies, comprising a first tube body and a second tube body, wherein the first tube body and the second tube body are connected in a sealed manner, the first tube body has a measuring inlet, measuring outlets and a first connection groove, and the second tube body has a second connection groove, the second connection groove and the first connection groove enclose a measuring channel, and the measuring inlet and the measuring outlets are in communication with two ends of the measuring channel, respectively;
a measuring assembly, provided within the tube bodies, wherein the measuring assembly comprises a first ultrasonic transducer, a second ultrasonic transducer and reflective elements, the first ultrasonic transducer and the second ultrasonic transducer are arranged along a length direction of the measuring channel, and are used to emit and receive ultrasonic waves, and the reflective elements are provided inside the measuring channel, and are configured so that the ultrasonic waves can propagate among the first ultrasonic transducer, the reflective elements and the second ultrasonic transducer.

Preferably, the first tube body comprises a first cylinder and a first circular ring coaxially provided within the first cylinder, wherein the first cylinder is connected to the first circular ring by a first connection portion, which is provided along a radial direction of the first circular ring, and the first connection portion extends from an inner wall of the first cylinder through an axis of the first circular ring to an inner wall of the first circular ring; a gap between the first cylinder and the first circular ring forms the measuring inlet, and a gap between the first circular ring and the first connection portion forms the measuring outlets, and a side of the first connection portion facing the second tube body is provided with the first connection groove.

Preferably, reinforcing ribs are also provided between the first cylinder and the first circular ring; arc transition surfaces are provided between the reinforcing ribs and the first cylinder, as well as between the reinforcing ribs and the first circular ring; arc transition surfaces are also provided between the first connection portion and the first cylinder.

The first connection portion has guiding surfaces, which are located between the first connection groove and the measuring outlets, and the guiding surfaces are inclined from the first connection groove toward the measuring outlets; the guiding surfaces are arc-shaped surfaces.

Preferably, the first connection portion further has guiding surfaces, which are connected between the first connection groove and the measuring outlets, and the guiding surfaces are inclined from the first connection groove toward the measuring outlets, for guiding a fluid in the measuring channel to flow towards the measuring outlets.

Preferably, the second tube body has a flow-adjusting channel and two branching channels, wherein the flow-adjusting channel is in communication with the measuring inlet, and the two branching channels are both in communication with the measuring outlets, a first end of the measuring channel is in communication with a middle section of the flow-adjusting channel, and a second end of the measuring channel is in communication with the two branching channels, and wherein after a fluid enters the flow-adjusting channel from the measuring inlet, the fluid converges to the measuring channel, and the fluid flowing out of the measuring channel diverges to the two branching channels and then flows out from the measuring outlets.

Preferably, the second tube body comprises a second cylinder and a second circular ring coaxially provided within the second cylinder, wherein the second cylinder is docked and coaxially provided with the first cylinder, and the second circular ring is docked with the first circular ring, the second cylinder has an open structure with a bottom wall, and the bottom wall of the second cylinder is located on a side of the second cylinder away from the first tube body, the second cylinder is connected to the second circular ring by a second connection portion, which is provided along a radial direction of the second circular ring, and the second connection portion extends from an inner wall of the second cylinder through an axis of the second circular ring to an inner wall of the second circular ring; a gap between the second cylinder and the second circular ring forms the flow-adjusting channel, which is provided opposite to the measuring inlet, a gap between the second circular ring and the second connection portion forms the two branching channels, which are provided opposite to the measuring outlets, a side of the second connection portion facing the first tube body is provided with the second connection groove.

Preferably, both the first connection portion and the second connection portion are provided with mounting positions adapted to the reflective elements, and the bottom wall of the second cylinder is provided with mounting grooves for installing the first ultrasonic transducer and the second ultrasonic transducer.

Preferably, positioning holes and positioning pins adapted to the positioning holes are provided between the first cylinder and the second cylinder, and the first tube body and the second tube body are connected to each other by inserting the positioning pins into the positioning holes.

Preferably, a sealing groove is provided on a side of the first circular ring facing away from the second circular ring, and the sealing groove is used to install a sealing ring.

Preferably, the reflective elements include N+1 first reflective members and N second reflective member(s), the N+1 first reflective members are provided within the first tube body, the N second reflective member(s) is/are provided within the second tube body and located between the first ultrasonic transducer and the second ultrasonic transducer, the N+1 first reflective members and the N second reflective member(s) are spaced apart and alternately arranged along the length direction of the measuring channel, wherein N is a natural number greater than 0.

The present invention also provides an ultrasonic flowmeter, the ultrasonic flowmeter is used to be installed on a meter body, and the meter body comprises an input tube, an output tube and a base, wherein the ultrasonic flowmeter comprises an adapter assembly and an instrument box, and further comprises the above ultrasonic measuring tube, the adapter assembly is threaded to both the meter body and the ultrasonic measuring tube, and the instrument box is connected to the adapter assembly and is located on a side of the ultrasonic measuring tube away from the base.

Preferably, the adapter assembly comprises a sleeve, an adapter tube and a positioning nut, wherein the adapter tube is threaded to the base, the sleeve is rotatably sleeved to an exterior of the ultrasonic measuring tube and is rotatably inserted into the adapter tube; the positioning nut is threaded to the adapter tube and allows the adapter tube to tightly clamp the sleeve; the instrument box is used to control a measurement of the ultrasonic measuring tube, and the instrument box comprises a box body and a control board; the box body is used to house the control board and to be connected with the adapter assembly.

Preferably, a sealing ring is provided between the sleeve and the adapter tube, a sealing ring is provided between the measuring tube and the sleeve, and a sealing ring is provided between the adapter tube and the base, which is used to prevent fluid leakage.

Preferably, the end of the sleeve away from the base is provided with a bottom base, which is provided with a wire crossing hole for connecting connection wires of the ultrasonic transducers to the control board inside the instrument box. The positioning nut includes an end cover, which abuts against the bottom base to avoid the sleeve from detaching from the adapter tube.

Compared to related technologies, the present invention achieves the following technical effects: the ultrasonic measuring tube of the present invention comprises tube bodies and a measuring assembly, wherein the tube bodies includes a first tube body and a second tube body, the first tube body and the second tube body are connected in a sealed manner, the first tube body has a measuring inlet, measuring outlets and a first connection groove, and the second tube body has a second connection groove, and the second connection groove and the first connection groove enclose a measuring channel, and the measuring inlet and the measuring outlets are in communication with two ends of the measuring channel, respectively; the measuring assembly is provided within the tube bodies, and the measuring assembly comprises a first ultrasonic transducer, a second ultrasonic transducer and reflective elements, the first ultrasonic transducer and the second ultrasonic transducer are arranged along a length direction of the measuring channel, and are used to emit and receive ultrasonic waves, and the reflective elements are provided inside the measuring channel, and are configured so that the ultrasonic waves can propagate among the first ultrasonic transducer, the reflective elements and the second ultrasonic transducer.

When using the ultrasonic measuring tube of the present invention, the fluid to be measured enters the measuring channel from the measuring inlet, and flows out from the measuring outlets, the first ultrasonic transducer and the second ultrasonic transducer are matched to emit and receive ultrasonic waves, and the reflective elements are used to reflect the ultrasonic waves, so that the ultrasonic waves propagate along the direction of the measuring channel, and thus the flow of the fluid is measured. For the ultrasonic measuring tube of the present invention, the tube bodies are a split type structure, which facilitates the installation of the measuring assembly as well as the later disassembly and maintenance while constructs the measuring channel. The ultrasonic measuring tube of the present invention has a simple and compact structure, and the measuring results are more accurate compared to the existing mechanical flowmeters.

The present invention further provides an ultrasonic flowmeter, which includes the ultrasonic measuring tube described above. The space occupied by the ultrasonic flowmeter can be effectively reduced. The ultrasonic flowmeter can be installed and used in places with limited installation space, offers the advantages of simple installation and disassembly, as well as convenient maintenance.

### BRIEF DESCRIPTION OF THE DRAWINGS

In order to more clearly illustrate the technical solutions in the embodiments of the present invention or in the related technologies, the drawings required for the embodiments will be briefly introduced below, and it would be apparent that the drawings in the following description only relate to some embodiments of the present invention, and that other drawings can be obtained based on these drawings without inventive effort for ordinary persons skilled in the art.
Fig. 1 is a schematic structural diagram of an ultrasonic measuring tube disclosed in Embodiment 1 of the present invention;
Fig. 2 is a schematic structural diagram of the ultrasonic measuring tube disclosed in Embodiment 1 of the present invention at another angle;
Fig. 3 is a schematic sectional structural diagram of the ultrasonic measuring tube disclosed in Embodiment 1 of the present invention along a direction parallel to a length of a measuring channel;
Fig. 4 is a schematic sectional structural diagram of the ultrasonic measuring tube disclosed in Embodiment 1 of the present invention along a direction perpendicular to the length of the measuring channel;
Fig. 5 is a schematic structural diagram of a first tube body of the ultrasonic measuring tube disclosed in Embodiment 1 of the present invention;
Fig. 6 is a schematic structural diagram of the first tube body of the ultrasonic measuring tube disclosed in Embodiment 1 of the present invention at another angle;
Fig. 7 is a schematic structural diagram of a second tube body of the ultrasonic measuring tube disclosed in Embodiment 1 of the present invention;
Fig. 8 is a schematic structural diagram of the second tube body of the ultrasonic measuring tube disclosed in Embodiment 1 of the present invention at another angle;
Fig. 9 is a schematic structural diagram of a ultrasonic flowmeter disclosed in Embodiment 2 of the present invention;
Fig. 10 is a schematic sectional structural diagram of the ultrasonic flowmeter disclosed in Embodiment 2 of the present invention;
Fig. 11 is a schematic disassembled structural diagram of the ultrasonic flowmeter disclosed in Embodiment 2 of the present invention.

In the drawings: 100, an ultrasonic measuring tube; 200, an ultrasonic flowmeter;
1, first tube body; 2, second tube body; 3, measuring channel; 4, measuring inlet; 5, measuring outlet; 6, first ultrasonic transducer; 7, second ultrasonic transducer; 8, first cylinder; 9, first circular ring; 10, first connection portion; 11, first connection groove; 12, reinforcing rib; 13, guiding surface; 14, second cylinder; 15, second circular ring; 16, bottom wall; 17, second connection portion; 18, flow-adjusting channel; 19, branching channel; 20, second connection groove; 21, mounting groove; 22, positioning hole; 23, positioning pin; 24, first reflector; 25, second reflector; 26, third reflector; 27, base; 28, meter body; 29, adapter tube; 30, instrument box; 31, input tube; 32, output tube; 33, sleeve; 34, positioning nut; 35, display; 36, sealing element.

### DETAILED DESCRIPTION OF THE EMBODIMENTS

The technical solutions in the embodiments of the present invention will be clearly and completely described below in conjunction with the drawings in the embodiments of the present invention. It is obvious that the described embodiments are only a part of the embodiments of the present invention and not all of the embodiments. Based on the embodiments in the present invention, all other embodiments obtained by ordinary persons skilled in the art without inventive effort fall within the protection scope of the present invention.

The objective of the present invention is to provide an ultrasonic measuring tube and an ultrasonic flowmeter, to solve the above problems in the related technologies, improving the accuracy of flow measurement, wherein the structure of the ultrasonic measuring tube is simple and compact, which is beneficial for reducing the space occupied by the ultrasonic flowmeter and improving the adaptability of the ultrasonic flowmeter.

In order to make the above objective, features and advantages of the present invention more obvious and understandable, the present invention is described in further detail below in conjunction with the drawings and specific embodiments.

### Embodiment 1

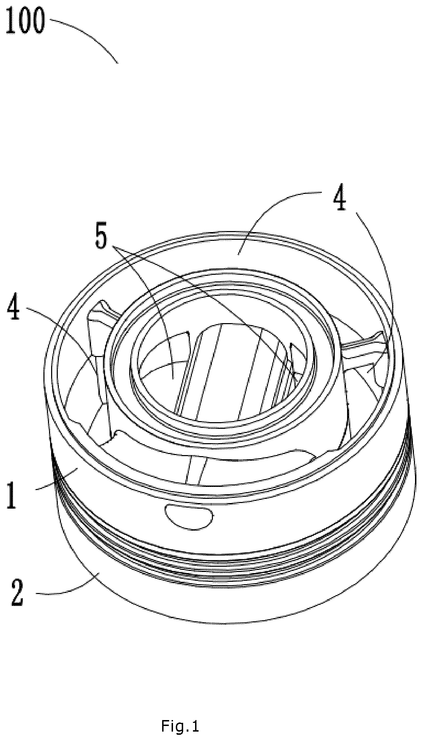

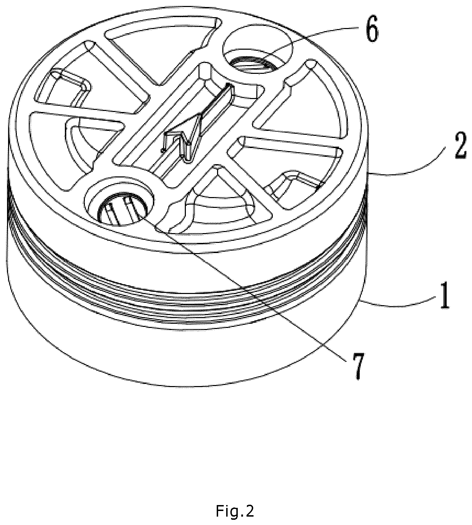

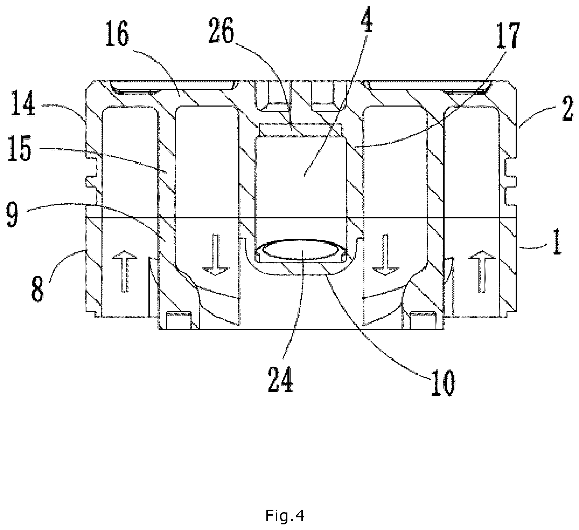

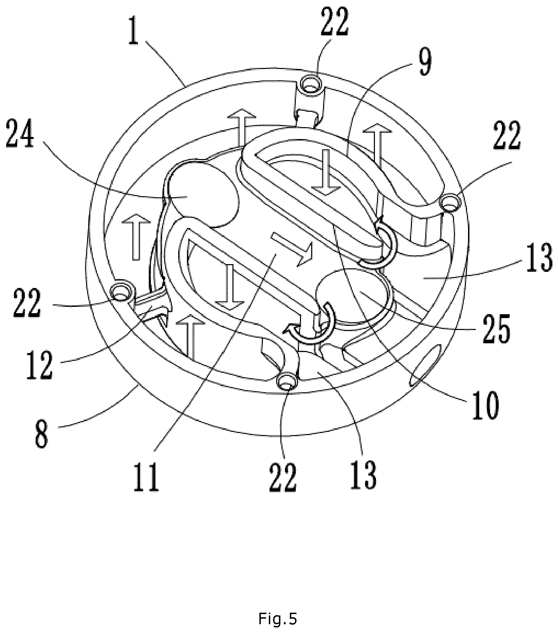

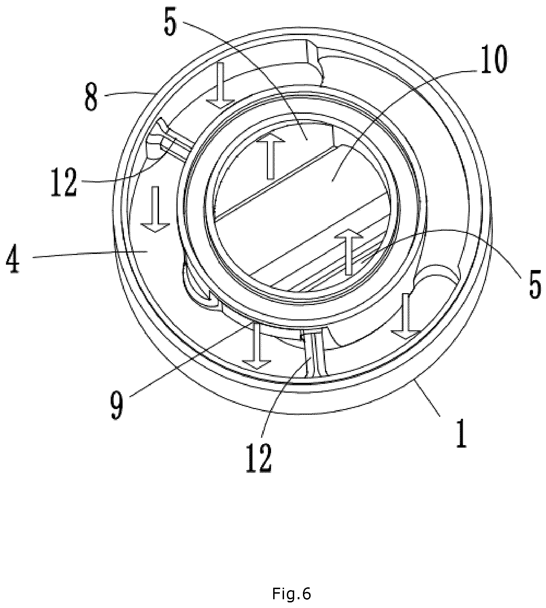

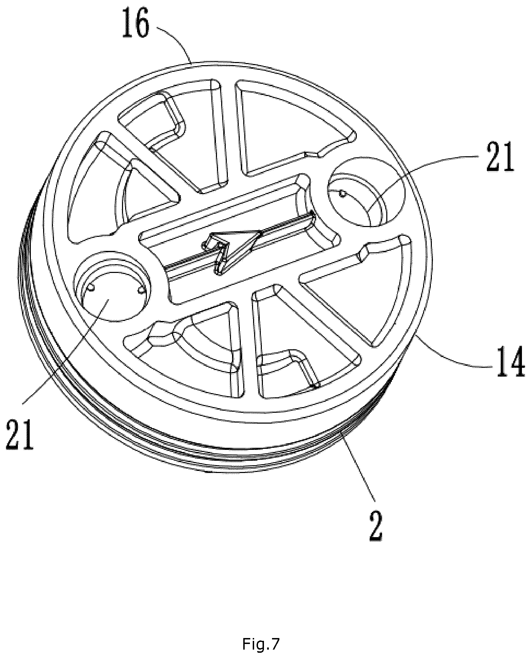

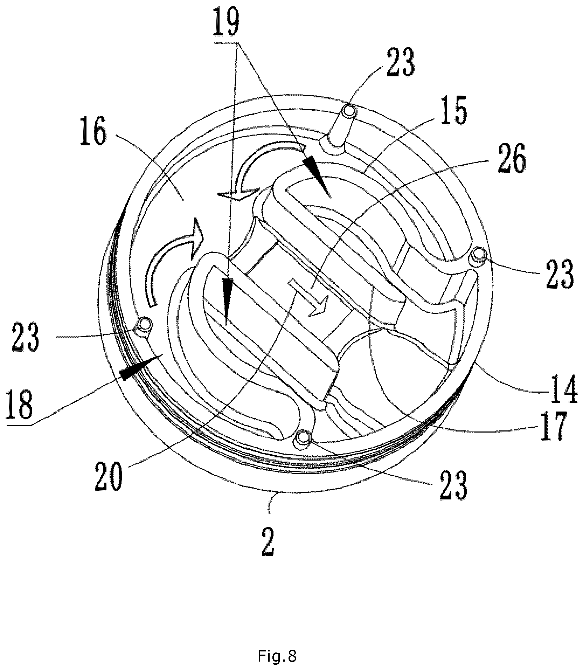

This embodiment provides an ultrasonic measuring tube 100, including tube bodies and a measuring assembly, with reference to Figs. 1-8, wherein the tube bodies includes a first tube body 1 and a second tube body 2, the first tube body 1 and the second tube body 2 are connected in a sealed manner, the first tube body 1 has a measuring inlet 4, measuring outlets 5 and a first connection groove 11, the second tube body 2 has a second connection groove 20, the second connection groove 20 and the first connection groove 11 enclose a measuring channel 3, and the measuring inlet 4 and the measuring outlets 5 are in communication with two ends of the measuring channel 3, respectively; the measuring assembly is provided within the tube bodies, and the measuring assembly comprises a first ultrasonic transducer 6, a second ultrasonic transducer 7 and reflective elements, wherein the first ultrasonic transducer 6 and the second ultrasonic transducer 7 are arranged along a length direction of the measuring channel 3, and are used to emit and receive ultrasonic waves, and the reflective elements are provided inside the measuring channel 3, and are configured so that the ultrasonic waves can propagate among the first ultrasonic transducer 6, the reflective elements and the second ultrasonic transducer 7.

When using the ultrasonic measuring tube 100 of the present invention, the fluid to be measured enters the measuring channel 3 from the measuring inlet 4, and flows out from the measuring outlets 5, the first ultrasonic transducer 6 and the second ultrasonic transducer 7 are matched to emit and receive ultrasonic waves, and the reflective elements are used to reflect the ultrasonic waves, so that the ultrasonic waves propagate along the direction of the measuring channel 3, and thus the flow of the fluid is measured. For the ultrasonic measuring tube 100 of the present invention, the tube bodies are a split type structure, which facilitates the installation of the measuring assembly as well as the later disassembly and maintenance while constructs the measuring channel 3. The ultrasonic measuring tube 100 of the present invention has a simple and compact structure, and the measuring results are more accurate compared to the existing mechanical flowmeters.

Wherein, the first tube body 1 includes a first cylinder 8 and a first circular ring 9 coaxially provided within the first cylinder 8, the first cylinder 8 is connected to the first circular ring 9 by a first connection portion 10, which is provided along a radial direction of the first circular ring 9, and the first connection portion 10 extends from an inner wall of the first cylinder 8 through an axis of the first circular ring 9 to an inner wall of the first circular ring 9; a gap between the first cylinder 8 and the first circular ring 9 forms the measuring inlet 4, and a gap between the first circular ring 9 and the first connection portion 10 forms the measuring outlets 5, and a side of the first connection portion 10 facing the second tube body 2 is provided with the first connection groove 11, and a length direction of the first connection portion 10 is parallel to the length direction of the measuring channel 3 to ensure that, the first connection groove 11 and the second connection groove 20 can form the measuring channel 3, and the measuring inlet 4 is in communication with the measuring outlets 5 through the first connection groove 11. The measuring inlet 4 is provided along a direction parallel to an axis of the first cylinder 8, the fluid enters the measuring channel 3 enclosed by the first connection groove 11 and the second tube body 2 from the measuring inlet 4. The measuring inlet 4 is an arcuate gap between the first cylinder 8 and the first circular ring 9, ensuring the uniformity of fluid entry. After the fluid enters the measuring channel 3 for flow measurement, it flows out through the measuring outlets 5 along a direction parallel to the axis of the first cylinder 8. The gaps between outer walls on both sides of the first connection portion 10 and the inner wall of the first circular ring 9 both form the measuring outlets 5, ensuring smooth outflow of the fluid.

In order to enhance the structural strength of the first tube body 1, a reinforcing rib 12 is provided between the first cylinder 8 and the first circular ring 9. Depending on the specification of the first tube body 1, multiple reinforcing ribs 12 can be provided, and the reinforcing ribs 12 are distributed around the axis of the first cylinder 8, improving the uniformity of the force applied to the first cylinder 8 and the first circular ring 9. Arc transition surfaces are provided between the reinforcing ribs 12 and the first cylinder 8, as well as between the reinforcing ribs 12 and the first circular ring 9, and arc transition surfaces are also provided between the first connection portion 10 and the first cylinder 8, which ensures that wall surfaces through which the fluid flows at the inlet are all arc-shaped surfaces, smooth, and free of sharp corners, allowing the fluid to enter the measuring channel 3 smoothly, which is beneficial for improving the measurement accuracy.

Additionally, the first connection portion 10 has guiding surfaces 13, which are located between the first connection groove 11 and the measuring outlets 5, and the guiding surfaces 13 are inclined from the first connection groove 11 toward the measuring outlets 5. The guiding surfaces 13 are arc-shaped surfaces. After the fluid enters the measuring channel 3 from the measuring inlet 4 for measurement, the fluid in the measuring channel 3 diverges to both sides through the inclined guiding surfaces 13, which guide the fluid to the measuring outlets 5 without sharp corner impacts, so that the fluid flow is non-turbulent and smoother. In this specific embodiment, the two measuring outlets 5 and the two guiding surfaces 13 both are symmetrically arranged.

It should be emphasized that the second tube body 2 has a flow-adjusting channel 18 and two branching channels 19. The flow-adjusting channel 18 is in communication with the measuring inlet 4, and the two branching channels 19 are both in communication with the measuring outlets 5. A first end of the measuring channel 3 is in communication with a middle section of the flow-adjusting channel 18, and a second end of the measuring channel 3 is in communication with the two branching channels 19. After the fluid enters the flow-adjusting channel 18 from the measuring inlet 4, it converges to the measuring channel 3, and the fluid flowing out of the measuring channel 3 diverges to the two branching channels 19, and then flows out from the measuring outlets 5. By communicating the middle section of the flow-adjusting channel 18 with the measuring channel 3, the present invention allows the fluid to enter the measuring channel 3 from both sides, transforming a turbulent flow into a steady flow, and the fluid flowing out of the measuring channel 3 quickly flows out through the two branching channels 19, resulting in a low pressure loss.

Specifically, the second tube body 2 includes a second cylinder 14 and a second circular ring 15 coaxially provided within the second cylinder 14. The second cylinder 14 is docked and coaxially provided with the first cylinder 8, and the second circular ring 15 is docked with the first circular ring 9. The second cylinder 14 has an open structure with a bottom wall 16, and the bottom wall 16 of the second cylinder 14 is located on a side of the second cylinder 14 away from the first tube body 1. The second cylinder 14 is connected to the second circular ring 15 by a second connection portion 17, which is provided along a radial direction of the second circular ring 15, and the second connection portion 17 extends from an inner wall of the second cylinder 14 through an axis of the second circular ring 15 to an inner wall of the second circular ring 15. The second connection portion 17 is provided opposite to the first connection portion 10. A gap between the second cylinder 14 and the second circular ring 15 forms the flow-adjusting channel 18, which is provided opposite to the measuring inlet 4. A gap between the second circular ring 15 and the second connection portion 17 forms the two branching channels 19, which are provided opposite to the measuring outlets 5. A side of the second connection portion 17 facing the first tube body 1 is provided with a second connection groove 20, and the flow-adjusting channel 18 is in communication with the branching channels 19 through the second connection groove 20. After the fluid flows in from the measuring inlet 4 and enters the flow-adjusting channel 18, it converges to the measuring channel 3, and the fluid flowing out of the measuring channel 3 diverges to the two branching channels 19, and then flows out from the measuring outlets 5. The flow-adjusting channel 18 is in communication with the measuring channel 3, so that the fluid flows into the measuring channel 3 from both sides, transforming a turbulent flow into a steady flow, and the fluid flowing out of the measuring channel 3 quickly flows out through the two branching channels 19, resulting in a low pressure loss.

In order to ensure the installation stability of the measuring assembly, both the first connection portion 10 and the second connection portion 17 are provided with mounting positions adapted to the reflective elements. The bottom wall 16 of the second cylinder 14 is provided with mounting grooves 21 for the first ultrasonic transducer 6 and the second ultrasonic transducer 7, which ensures the normal operation of the measuring assembly.

In this specific embodiment, positioning holes 22 and positioning pins 23 adapted to the positioning holes 22 are provided between the first cylinder 8 and the second cylinder 14. The first tube body 1 and the second tube body 2 are connected to each other by inserting the positioning pins 23 into the positioning holes 22, which enables convenient installation and disassembly. A sealing groove is provided on a side of the first circular ring 9 facing away from the second circular ring 15, and the sealing groove is used to install a sealing ring to ensure a sealed connection between the first tube body 1 and the second tube body 2. In practical applications, the sealing groove can also be provided on a side of the second circular ring 15 facing the first tube body 1. It should be noted herein that either one or both of the positioning holes 22 and the positioning pins 23 may be provided on the first tube body 1, while the corresponding positions on the second tube body 2 may be provided with the other one or both of the positioning holes 22 and the positioning pins 23, so as to achieve the inserting connection between the first tube body 1 and the second tube body 2. It should also be noted that, in the ultrasonic measuring tube 100 of the present invention, the first tube body 1 and the second tube body 2 are connected in a sealed manner to ensure the sealing of the measuring channel 3; additionally, connection methods such as adhesive bonding or welding may also be selected.

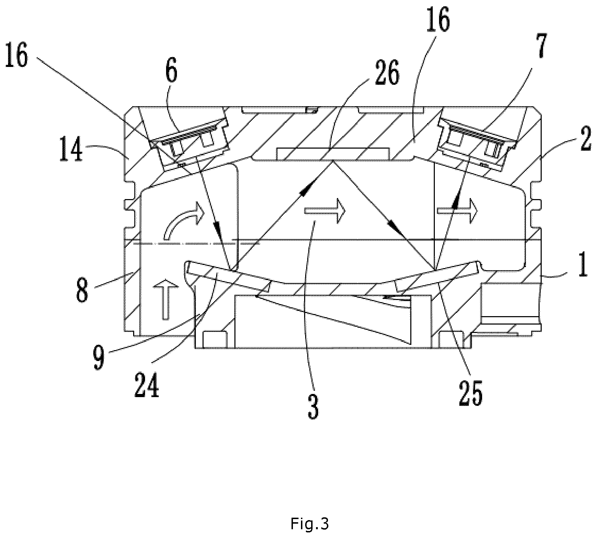

More specifically, the reflective elements include N+1 first reflective members and N second reflective member(s). The N+1 first reflective members are provided within the first tube body, and the N second reflective member(s) is/are provided within the second tube body and located between the first ultrasonic transducer 6 and the second ultrasonic transducer 7. The N+1 first reflective members and the N second reflective member(s) are spaced apart and alternately arranged along the length direction of the measuring channel, wherein N is a natural number greater than 0. In this specific embodiment, the number of the first reflective members is two, with a first reflector 24 and a second reflector 25 provided within the first tube body 1; the number of the second reflective member is one, with a third reflector 26 provided within the second tube body 2. The third reflector 26 is located between the first ultrasonic transducer 6 and the second ultrasonic transducer 7, to ensure the smooth propagation of ultrasonic waves. For specific emission and reception paths of ultrasonic waves, reference may be made to Fig. 3. In other specific embodiments achievable by the present invention, the number, distribution and type of the reflective elements can be selected and adjusted according to specific working conditions, so as to improve the flexible adaptability of the ultrasonic measuring tube 100.

### Embodiment 2

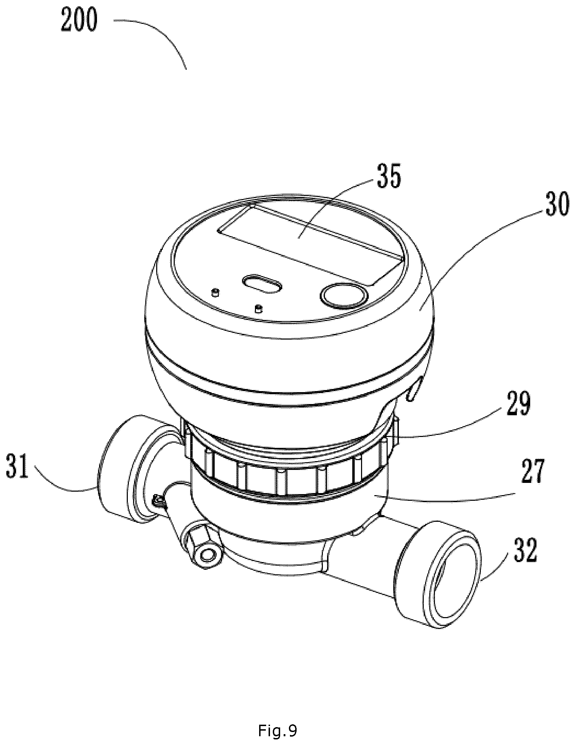

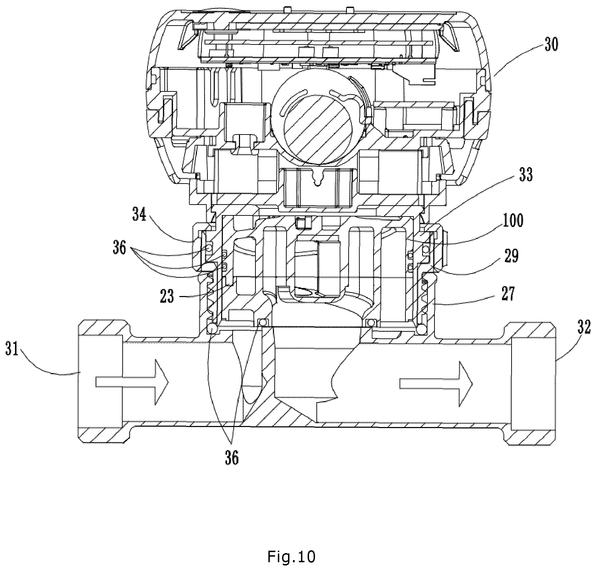

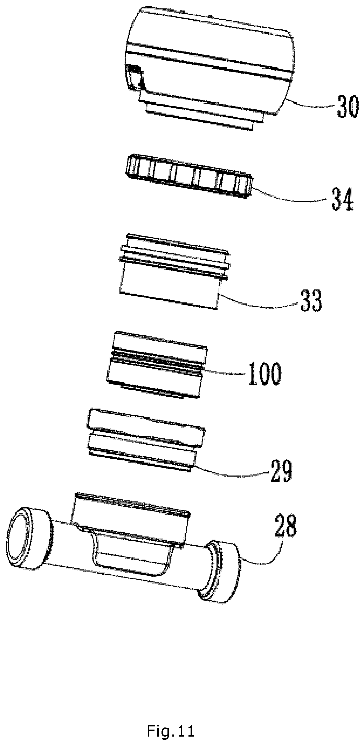

This embodiment provides an ultrasonic flowmeter 200, which includes the ultrasonic measuring tube 100 described in Embodiment 1. Referring to Figs. 9-11, the ultrasonic measuring tube 100 can be in communication with the fluid to be measured. The space occupied by the ultrasonic flowmeter 200 can be effectively reduced. The ultrasonic flowmeter 200 can be installed and used in places with limited installation space, offers the advantages of simple installation and disassembly, as well as convenient maintenance.

The ultrasonic flowmeter 200 of the present invention further includes a base 27, a meter body 28, an adapter assembly and an instrument box 30. The base 27 is connected to the meter body 28, and the ultrasonic measuring tube 100 is connected to the base 27 via the adapter assembly. The instrument box 30 is connected to the adapter assembly. The meter body 28 has an input tube 31 and an output tube 32, wherein the measuring inlet 4 is in communication with the input tube 31, and the measuring outlets 5 are in communication with the output tube 32. The ultrasonic flowmeter 200 of the present invention allows for the replacement of a mechanical flowmeter with the ultrasonic flowmeter 200 without disassembling the meter body 28. During internal maintenance, cleaning of the ultrasonic flowmeter 200, only the ultrasonic measuring tube 100 needs to be disassembled for maintenance, cleaning, and in the meanwhile, it is also possible to temporarily replace it with an ultrasonic calorimetry unit with the same specification for continued use, which makes maintenance simple and effectively enhances the adaptability of the ultrasonic flowmeter 200. The meter case is provided with a display 35, which is convenient for the operator to monitor the measurement information of the ultrasonic flowmeter 200.

Furthermore, the ultrasonic flowmeter 200 of the present invention further includes a sleeve 33 and a positioning nut 34. The sleeve 33 is rotatably sleeved to an exterior of the ultrasonic measuring tube 100, with an end of the sleeve 33 extending into the adapter assembly. One end of the adapter assembly is threaded to the base 27, while the other end of the adapter assembly is threaded to the positioning nut 34. The positioning nut 34 is sleeved to an exterior of the sleeve 33 and secures the axial position of the sleeve 33 and the ultrasonic measuring tube 100. The sleeve 33 is connected to the instrument box 30 in a snap fit manner. Sealing elements 36 are provided between the ultrasonic measuring tube 100 and the sleeve 33, between the sleeve 33 and the adapter assembly, between the adapter assembly and the base 27, and between the ultrasonic measuring tube 100 and the base 27.

In this specific embodiment, the adapter assembly includes an adapter tube 29, and the adapter tube 29 includes a first male thread, a first core hole and a second male thread. The first male thread is used for threaded connection with a female thread on the base 27, thereby fixedly connecting the adapter tube 29 to the base 27. The sleeve 33 is rotatably inserted into the first core hole, and the sleeve 33 can rotate relative to the adapter tube 29 to adjust the relative position of the sleeve 33 and the base 27, so that the measuring inlet 4 of the ultrasonic measuring tube 100 is opposite to and in communication with the input tube 31 on the base 27, and the measuring outlets 5 are opposite to and in communication with the output tube 32 on the base 27. The sleeve 33 includes a second core hole, which is sleeved to an outer wall of the ultrasonic measuring tube 100, and the sleeve 33 and the ultrasonic measuring tube 100 can rotate relative to each other, to adjust the relative position of the sleeve 33 and the ultrasonic measuring tube 100, so that the measuring inlet 4 of the ultrasonic measuring tube 100 is opposite to and in communication with the input tube 31 on the base 27, and the measuring outlets 5 are opposite to and in communication with the output tube 32 on the base 27. The positioning nut 34 is used to securely connect the sleeve 33 to the adapter tube 29 and clamps the sleeve 33 tightly onto the ultrasonic measuring tube 100. The positioning nut 34 includes a female thread and an end cover, and the female thread is threaded to the second male thread of the adapter tube 29, thereby allowing the adapter tube 29 to tightly clamp the sleeve 33 and thus allowing the sleeve 33 to tightly clamp the ultrasonic measuring tube 100. The end cover abuts against the sleeve 33 to prevent the sleeve 33 from detaching from the adapter tube 29.

The instrument box 30 is used to control the measurement of the ultrasonic measuring tube 100. The instrument box 30 includes a box body and a control board. The box body is used to house the control board and to be connected with the adapter assembly. Specifically, the box body includes a snap hook which is fitted with a snap slot on the sleeve 33 in a snap fit manner, so that the instrument box 30 can be connected with the adapter assembly. During disassembly, the instrument box 30 can be removed simply by disengaging the snap hook from the snap slot. Then, after the positioning nut 34 is unscrewed, the sleeve 33 and the measuring tube can be withdrawn upwardly together.

Optionally, a sealing ring is provided between the sleeve 33 and the adapter tube 29, a sealing element 36 is provided between the measuring tube and the sleeve 33, and a sealing element 36 is provided between the adapter tube 29 and the base 27, which is used to prevent fluid leakage. Optionally, the end of the sleeve 33 away from the base 27 is provided with a bottom base, which is provided with a wire crossing hole for connecting connection wires of the first ultrasonic transducer 6 and the second ultrasonic transducer 7 to the control board inside the instrument box 30. The positioning nut 34 includes the end cover, which abuts against the bottom base to avoid the sleeve 33 from detaching from the adapter tube 29.

The ultrasonic measuring tube 100 of the present invention has a simple and compact structure, occupies little space. When the ultrasonic measuring tube 100 provided in this solution is used to replace a mechanical flowmeter, it can improve the measurement accuracy while effectively reducing the length of the meter body 28. In addition, it can be installed in places with limited installation space, offers the advantages of simple installation and disassembly, as well as convenient maintenance.

In the present invention, specific examples are used to illustrate the principles and embodiments of this invention. The descriptions of the above embodiments are only intended to help understand the method and core ideas of the invention. In the meanwhile, for ordinary persons skilled in the art, variants may be made to the specific embodiments and the application scope based on the ideas of the present invention. In summary, the content disclosed in this specification should not be construed as limiting this invention.

## Claims

1. An ultrasonic measuring tube, **characterized in that**, it comprises: tube bodies, comprising a first tube body and a second tube body, wherein the first tube body and the second tube body are connected in a sealed manner, the first tube body has a measuring inlet, measuring outlets and a first connection groove, and the second tube body has a second connection groove, the second connection groove and the first connection groove enclose a measuring channel, and the measuring inlet and the measuring outlets are in communication with two ends of the measuring channel, respectively;
a measuring assembly, provided within the tube bodies, wherein the measuring assembly comprises a first ultrasonic transducer, a second ultrasonic transducer and reflective elements, the first ultrasonic transducer and the second ultrasonic transducer are arranged along a length direction of the measuring channel, and are used to emit and receive ultrasonic waves, and the reflective elements are provided inside the measuring channel, and are configured so that the ultrasonic waves can propagate among the first ultrasonic transducer, the reflective elements and the second ultrasonic transducer.

2. The ultrasonic measuring tube according to claim 1, **characterized in that**, the first tube body comprises a first cylinder and a first circular ring coaxially provided within the first cylinder, wherein the first cylinder is connected to the first circular ring by a first connection portion, which is provided along a radial direction of the first circular ring, and the first connection portion extends from an inner wall of the first cylinder through an axis of the first circular ring to an inner wall of the first circular ring; a gap between the first cylinder and the first circular ring forms the measuring inlet, and a gap between the first circular ring and the first connection portion forms the measuring outlets, and a side of the first connection portion facing the second tube body is provided with the first connection groove.

3. The ultrasonic measuring tube according to claim 2, **characterized in that**, the first connection portion further has guiding surfaces, which are connected between the first connection groove and the measuring outlets, and the guiding surfaces are inclined from the first connection groove toward the measuring outlets, for guiding a fluid in the measuring channel to flow towards the measuring outlets.

4. The ultrasonic measuring tube according to claim 2, **characterized in that**, the second tube body has a flow-adjusting channel and two branching channels, wherein the flow-adjusting channel is in communication with the measuring inlet, and the two branching channels are both in communication with the measuring outlets, a first end of the measuring channel is in communication with a middle section of the flow-adjusting channel, and a second end of the measuring channel is in communication with the two branching channels, and wherein after a fluid enters the flow-adjusting channel from the measuring inlet, the fluid converges to the measuring channel, and the fluid flowing out of the measuring channel diverges to the two branching channels and then flows out from the measuring outlets.

5. The ultrasonic measuring tube according to claim 4, **characterized in that**, the second tube body comprises a second cylinder and a second circular ring coaxially provided within the second cylinder, wherein the second cylinder is docked and coaxially provided with the first cylinder, and the second circular ring is docked with the first circular ring, the second cylinder has an open structure with a bottom wall, and the bottom wall of the second cylinder is located on a side of the second cylinder away from the first tube body, the second cylinder is connected to the second circular ring by a second connection portion, which is provided along a radial direction of the second circular ring, and the second connection portion extends from an inner wall of the second cylinder through an axis of the second circular ring to an inner wall of the second circular ring; a gap between the second cylinder and the second circular ring forms the flow-adjusting channel, which is provided opposite to the measuring inlet, a gap between the second circular ring and the second connection portion forms the two branching channels, which are provided opposite to the measuring outlets, a side of the second connection portion facing the first tube body is provided with the second connection groove.

6. The ultrasonic measuring tube according to claim 5, **characterized in that**, positioning holes and positioning pins adapted to the positioning holes are provided between the first cylinder and the second cylinder, and the first tube body and the second tube body are connected to each other by inserting the positioning pins into the positioning holes.

7. The ultrasonic measuring tube according to claim 5, **characterized in that**, a sealing groove is provided on a side of the first circular ring facing away from the second circular ring, and the sealing groove is used to install a sealing ring.

8. The ultrasonic measuring tube according to any one of claims 1-7, **characterized in that**, the reflective elements include N+1 first reflective members and N second reflective member(s), the N+1 first reflective members are provided within the first tube body, the N second reflective member(s) is/are provided within the second tube body and located between the first ultrasonic transducer and the second ultrasonic transducer, the N+1 first reflective members and the N second reflective member(s) are spaced apart and alternately arranged along the length direction of the measuring channel, wherein N is a natural number greater than 0.

9. An ultrasonic flowmeter, **characterized in that**, the ultrasonic flowmeter is used to be installed on a meter body, and the meter body comprises an input tube, an output tube and a base, wherein the ultrasonic flowmeter comprises an adapter assembly and an instrument box, and further comprises the ultrasonic measuring tube according to any one of claims 1-8, the adapter assembly is connected to both the meter body and the ultrasonic measuring tube, and the instrument box is connected to the adapter assembly and is located on a side of the ultrasonic measuring tube away from the base.

10. The ultrasonic flowmeter according to claim 9, **characterized in that**, the adapter assembly comprises a sleeve, an adapter tube and a positioning nut, wherein the adapter tube is threaded to the base, the sleeve is rotatably sleeved to an exterior of the ultrasonic measuring tube and is rotatably inserted into the adapter tube; the positioning nut is threaded to the adapter tube and allows the adapter tube to tightly clamp the sleeve; the instrument box is used to control a measurement of the ultrasonic measuring tube, and the instrument box comprises a box body and a control board; the box body is used to house the control board and to be connected with the adapter assembly.
